# EUROPÄISCHE PATENTANMELDUNG

(11) **EP 4 789 819 A1**
(43) Veröffentlichungstag der Anmeldung: **12.08.2026**
(21) Anmeldenummer: 25157021.4
(22) Anmeldetag: 11.02.2025
(51) Int. Cl.: B25J 9/00, B25J 15/00, B25J 15/06

(54) **ABSTREIFEINRICHTUNG SOWIE GREIFEINRICHTUNG**

(71) Anmelder: Frimo Innovative Technologies GmbH, 49504 Lotte (DE)
(72) Erfinder: EHRMANN, Thomas, 83278 Traunstein (DE)
(74) Vertreter: Hoffmann Eitle

(57) **Zusammenfassung**

Die Erfindung betrifft eine Abstreifeinrichtung und eine Greifeinrichtung mit einer Abstreifeinrichtung. Ferner betrifft die Erfindung ein System umfassend die Greifeinrichtung und eine Pineinheit. Mit der Greifeinrichtung kann ein insbesondere biegeschlaffes Dekorelement, wie Echtleder, Kunstleder, ein Textilelement oder eine Folie aufgenommen, gehalten und/oder in ein Kaschierwerkzeug eingelegt werden.

## Beschreibung

### Technisches Gebiet

Die Erfindung betrifft eine Abstreifeinrichtung und eine Greifeinrichtung mit einer Abstreifeinrichtung. Ferner betrifft die Erfindung ein System umfassend die Greifeinrichtung und eine Pineinheit.

Mit der Greifeinrichtung kann ein insbesondere biegeschlaffes Dekorelement, wie Echtleder, Kunstleder, ein Textilelement oder eine Folie aufgenommen, gehalten und/oder in ein Kaschierwerkzeug eingelegt werden.

### Stand der Technik

Im Stand der Technik sind verschiedene Maßnahmen bekannt, um einen beispielsweise biegeschlaffen Dekorzuschnitt in ein Presskaschierwerkzeug einzulegen und für einen Kaschiervorgang vorzubereiten.

Der Dekorzuschnitt wird nach dem Einlegen an verschiedenen Positionen mittels pneumatisch oder elektromotorisch bewegbarer Zangen oder Pins gehalten. Die Zangen oder Pins können über eine sogenannte Kulissensteuerung bewegt werden oder auch in ihrer Position verbleiben.

Das Einlegen des biegeschlaffen Dekorzuschnitts in das Presskaschierwerkzeug erfolgt oftmals manuell. Dieses Vorgehen ist fehleranfällig, da die korrekte Positionierung des Dekorzuschnitts maßgeblich von der Erfahrung und dem Können des Maschinenbedieners abhängt. Ein nicht korrekt in der Kaschieranlage platzierter Dekorzuschnitt führt letztlich zur Herstellung eines fehlerhaften Bauteils.

### Darstellung der Erfindung

Der Erfindung liegt die Aufgabe zugrunde, die Prozesssicherheit zu erhöhen und einen Einlegeprozess zu beschleunigen.

Die erfindungsgemäße Aufgabe wird durch eine Abstreifeinrichtung für eine Greifeinrichtung gelöst, wobei die Greifeinrichtung zum Halten eines Dekorelements eingerichtet ist. Die Abstreifeinrichtung weist auf: ein bewegbares Abstreifelement, sowie einen Biegestab, der durch eine Öffnung eines Dekorelements und in eine Zentrieröffnung einer Pineinheit führbar ist. Der Biegestab ist elastisch verformbar.

Durch die Abstreifeinrichtung kann die Handhabung eines Dekorelements maschinell erfolgen. Dies erhöht die Prozesssicherheit und vermeidet eine fehlerhafte Handhabung. Der Biegestab ist elastisch verformbar, um Positionsabweichungen und/oder Formänderungen des Dekorelements auszugleichen.

Optional kann der Biegestab entlang seiner Erstreckungsrichtung verfahren werden, um das Aufnehmen des Zuschnittes zu erleichtern. Insbesondere umfasst die Abstreifeinrichtung eine Antriebseinheit, um den Biegestab zu entlang seiner Erstreckungsrichtung bewegen.

Mittels der Abstreifeinrichtung, insbesondere dem bewegbaren Abstreifelement, kann ein Dekorelement von der Greifeinrichtung gelöst werden.

Gemäß einer bevorzugten Ausführungsform ist es vorgesehen, dass das Abstreifelement eine Öffnung aufweist, die für das spätere Überdrücken einer Freibohrung und/oder für das spätere Überdrücken des Pinlochs auf die Pineinheit nutzbar ist.

Die Abstreifeinrichtung kann einen Zustellzylinder aufweisen, der beispielsweise pneumatisch, elektrisch oder hydraulisch betätigbar ist, wobei ein im Zustellzylinder aufgenommener Zylinder einen Zylinderflansch umfasst oder an diesem befestigt ist. Mit dem Zylinderflansch kann eine definierte Endposition gewährleistet werden.

Ferner kann ein Anschlagelement vorgesehen sein, mit dem eine Abstreifbewegung der Abstreifeinrichtung begrenzt werden kann.

Es ist bevorzugt, dass sich der Biegestab in einer Bewegungsrichtung des Abstreifelements erstreckt. Somit kann das Dekorelement bei einer Bewegung des Abstreifelements entlang dem Biegestab geführt werden.

Die Abstreifeinrichtung umfasst gemäß einer weiteren Ausführungsform ein Klemmstück, welches Klemmstück eine Öffnung aufweist, in der eine Welle aufgenommen ist, an deren Ende das Abstreifelement vorgesehen ist.

Gemäß einem weiteren Aspekt wird eine Greifeinrichtung bereitgestellt, umfassend eine oder mehrere Abstreifeinrichtungen, wobei die Abstreifeinrichtung ein bewegbares Abstreifelement, einen durch eine Öffnung eines Dekorelements und in eine Zentrieröffnung einer Pineinheit einführbaren Biegestab umfasst. Der Biegestab ist elastisch verformbar ausgebildet.

Gemäß einer bevorzugten Ausführungsform wird eine Saugeinrichtung zum Halten des Dekorelements an der Greifeinrichtung bereitgestellt. Somit kann das Dekorelement für einen Transport zeitweise fixiert werden.

Es ist bevorzugt, dass die Greifeinrichtung einen Roboter (oder vergleichbare Einrichtung), insbesondere einen Mehrachs-Roboter umfasst, um das Dekorelement sicher und flexibel aufzunehmen und beispielsweise an ein Kaschierwerkzeug zu übergeben.

Gemäß einem weiteren Aspekt wird ein System bereitgestellt, umfassend eine Greifeinrichtung gemäß einem der zuvor genannten Aspekte und die Pinheit zur Aufnahme des Dekorzuschnitts beim Abstreifen von der Greifeinrichtung.

Eine Aufwertung der Qualität bei Innenraumkomponenten kann durch eine individuelle Ausgestaltung erfolgen, z. B. durch entsprechende Oberflächen Echtleder, Kunstleder, einem Textilelement oder einer Folie. Bei der Fertigung werden ein formstabiler Träger und ein Dekorelement bei definierten Drücken und Temperaturen verbunden.

Gemäß einer bevorzugten Ausführungsform ist die Zentrieröffnung zumindest abschnittsweise kegelförmig ausgebildet. Somit wird ein gewisser Spielraum zur Aufnahme des Biegestabs bereitgestellt, sodass eine Verformung des Biegestabs bei der Aufnahme des Dekorelements ausgeglichen werden kann.

Das System kann eine Greifeinrichtung gemäß einem der zuvor genannten Aspekte aufweisen.

Ferner wird ein Verfahren zum Einbringen eines Dekorelements in ein Kaschierwerkzeug bereitgestellt, umfassend die Schritte: Bereitstellen einer Abstreifeinrichtung, umfassend einen Biegestab, der durch eine Öffnung eines Dekorelements führbar ist, Einfädeln des Biegestabs in eine Öffnung des Dekorelements und Positionieren des Dekorelements an einer Greifeinrichtung, Bewegen des Dekorelements entlang des Biegestabs zum Abstreifen des Dekorelements von der Greifeinrichtung.

Die Abstreifeinrichtung, die Greifeinrichtung und/oder das Kaschierwerkzeug kann/können gemäß einem der zuvor genannten Aspekte ausgebildet sein.

Beim Abstreifen kann ein im Dekorelement vorgesehenes Pinloch auf einen Pin des Kaschierwerkzeug gedrückt werden. Somit wird das Dekorelement für den nachfolgenden Kaschierprozess bereitgestellt.

Das Dekorelement kann gemäß einer Ausführungsform des Verfahrens zeitweise mittels Unterdruck an der Greifeinrichtung gehalten werden. Auf diese Weise kann das Dekorelement derart an der Greifeinrichtung gehalten werden, dass die Greifeinrichtung zusammen mit dem Dekorelement bewegt wird, insbesondere in Richtung eines Kaschierwerkzeugs.

Zum Herstellen eines Bauteils umfasst das Verfahren den Schritt des Kaschierens des abgestreiften Dekorelements auf einen formastabilen Träger.

Bei dem genannten Dekorelement, welches insbesondere biegeschlaff ausgebildet ist, kann es sich bevorzugt um ein Echtleder, ein Kunstleder, ein Textilelement oder eine Folie handeln.

### Kurze Beschreibung der Zeichnungen

- Fig. 1: zeigt eine perspektivische Ansicht einer Ausführungsform einer Abstreifeinheit einer erfindungsgemäßen Greifeinrichtung.

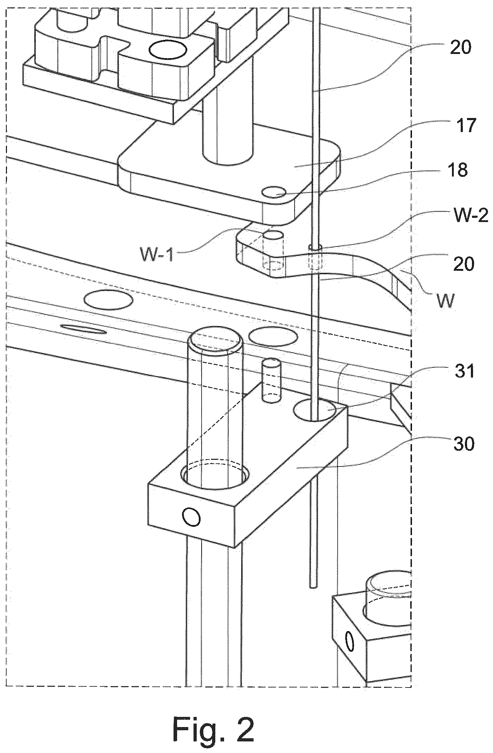

- Fig. 2: zeigt eine weitere Ansicht der Ausführungsform der Abstreifeinheit mit Einfädelvorgang gemäß der Ausführungsform.
- Fig. 3: zeigt ein positioniertes und eingepinntes Dekor auf einer Pineinheit.
- Fig. 4: zeigt eine Greifeinrichtung mit mehreren Abstreifeinheiten gemäß der Erfindung.

### Beschreibung von Ausführungsformen

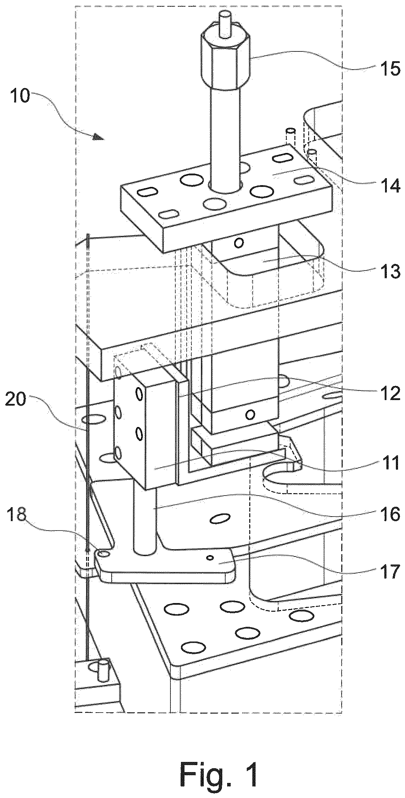

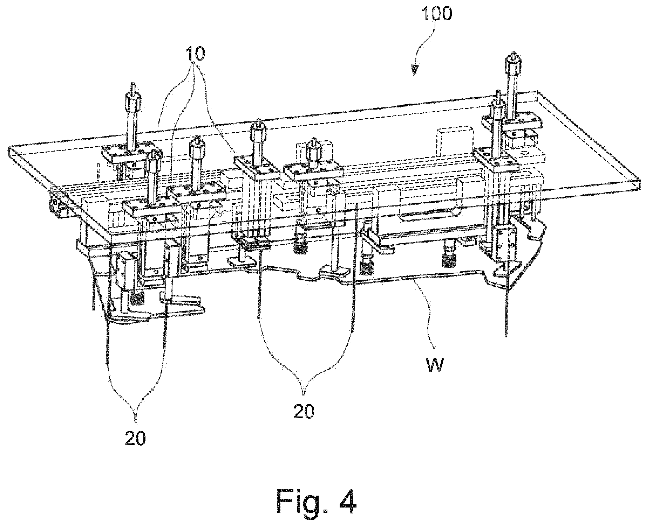

Fig. 1 ist eine perspektivische Ansicht einer Abstreifeinrichtung 10, die eine Komponente einer Greifeinrichtung 100 ist. Die Greifeinrichtung 100 mit mehreren Abstreifeinrichtungen 10 wird in Fig. 4 dargestellt, um ein Dekorelement, beispielsweise Echtleder, Kunstleder, ein Textilelement oder eine Folie an mehreren Stellen zu halten.

Mittels der Greifeinrichtung 100 kann ein Dekorelement W gehandhabt und positionsgenau in ein Kaschierwerkzeug eingelegt werden. Mit einem solchen Kaschierwerkzeug können Dekoroberflächen für beispielsweise Fahrzeuginnenraumbauteile hergestellt werden.

Die Abstreifeinrichtungen 10 umfassen ein Klemmstück 11, welches an einem Befestigungswinkel 12 angebracht ist. Ausgehend vom Befestigungswinkel 12 erstreckt sich ein Zustellzylinder 13, wobei der im Zustellzylinder 13 aufgenommene Zylinder einen Zylinderflansch 14 umfasst oder an diesem befestigt ist. Ferner ist eine Anschlagmutter 15 (Anschlagelement) vorgesehen. Durch die Anschlagmutter 15 wird ein definierter Hub des Zustellzylinders 13 festgelegt, da der Zylinderflansch 14 bei einer Öffnungsbewegung der Greifeinrichtung 10 gegen die Anschlagmutter 15 fährt.

Das Klemmstück 11 nimmt in einer Öffnung eine Welle 16 auf, an deren Ende ein Abstreifblech 17 (Abstreifelement) befestigt ist. Das Abstreifblech 17 umfasst eine Freibohrung 18 (Öffnung), die als Öffnung am Abstreifblech 17 ausgebildet ist.

In vertikaler Richtung unterhalb der zuvor beschriebenen Komponenten befindet sich eine sogenannte Pin-Einheit 30, die ein Zentrieröffnung 31 aufweist.

Die Abstreifeinrichtungen 10 umfassen einen Biegestab 20, der sich in vertikaler Richtung erstreckt und der biegsam ausgebildet ist. Der Biegestab 20 der jeweiligen Abstreifeinrichtung 10, der durch eine entsprechende Öffnung des Werkstücks W (Dekorelement) geführt ist, kann beim Einlegen des Werkstücks W in das Werkzeug in das Zentrieröffnung 31 eindringen, wobei durch die Flexibilität des Biegestabs 20 ein Toleranzausgleich stattfinden kann.

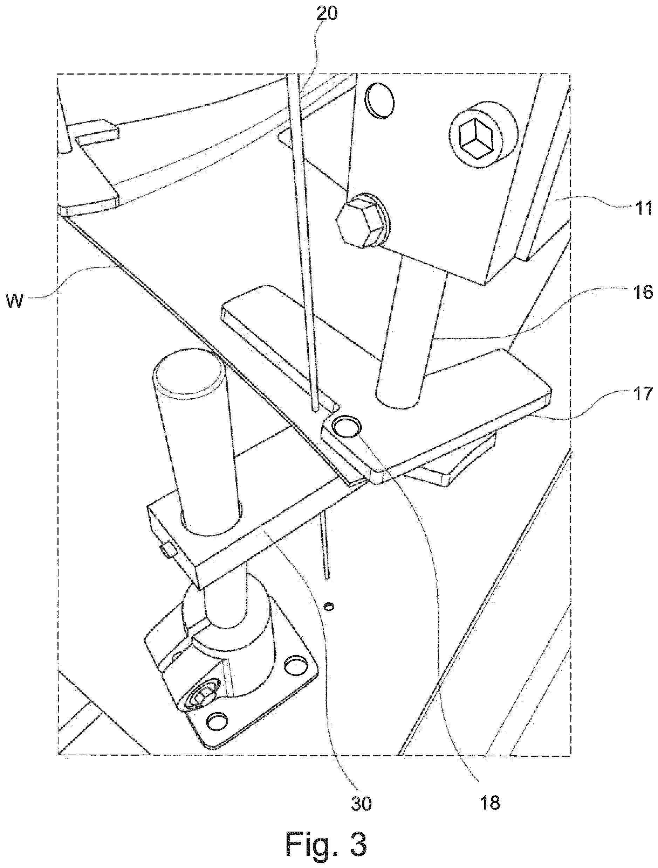

Fig. 3 zeigt in anschaulicher Weise, wie ein Dekorelement W mit der Abstreifeinrichtungen 10 gehalten wird, während der Biegestab 20 durch eine Öffnung des Dekorelements W sowie der Zentrieröffnung 31 der unterhalb des Dekorelements W angeordneten Pineinheit 30 geführt wird.

In Fig. 4 wird die Greifeinrichtung 100 mit mehreren Abstreifeinrichtungen 10 dargestellt. Diese sind je nach Dimension und Kontur des zu fertigenden Bauteils über die Greifeinrichtung 100 verteilt und jeweils eingerichtet, das einzulegende Dekorelement W an einer bestimmten Stelle zu greifen und während des Einlegens zu führen.

Im Betrieb der Greifeinrichtung 100 wird ein Einlegen eines Dekorelements (Dekorzuschnitt) wie folgt durchgeführt:
Zunächst wird das biegeschlaffe Dekorelement W vorab zusätzlich zu einem Pinloch W-1 mit einem weiteren Stanzloch W-2 versehen. Das Dekorelement W wird nunmehr derart im Bereich der Greifeinrichtung 100 bereitgestellt, dass die Biegestäbe 20 in ein jeweiliges Stanzloch W-2 eingefädelt werden können. Nunmehr wird das Dekorelement W mit den Abstreifeinrichtungen 10 der Greifeinrichtung 100 mit Saugeinrichtungen für den Transport fixiert. Sollten sich Positionsabweichungen und Formänderungen des Dekorelements W ergeben, so können diese durch eine Verformung der Biegestäbe 20 ausgeglichen werden.

Das Dekorelement W wird nunmehr entlang der Biegestäbe 20 auf das Formteil des Kaschierwerkzeugs und auf die Pineinheit 30 abgestreift. Das Abstreifen erfolgt über die Zustellbewegung des Zylinders 13, der das Abstreifelement 17 in vertikaler Richtung zum Formteil bewegt.

Die Freibohrung 18 im Abstreifblech 17 drückt dabei das Pinloch W-1 im Dekorelement W auf einen jeweiligen Pin im Kaschierwerkzeug. Auf diese Weise wird das Dekorelement W zum Formteil übergeben.

Die Erfindung hat den Vorteil, dass manuelle Eingriffe eines Bedieners des Kaschierwerkzeugs in den Fertigungsprozess vermieden werden können. Dabei können Prozessparameter digital überwacht und die Prozesssicherheit erhöht werden.

## Patentansprüche

1. Abstreifeinrichtung (10) für eine Greifeinrichtung (100), wobei die Greifeinrichtung zum Halten eines Dekorelements (W) eingerichtet ist, umfassend
ein bewegbares Abstreifelement (17), und
einen Biegestab (20), der durch eine Öffnung eines Dekorelements (W) und in eine Zentrieröffnung (31) einer Pineinheit (30) einführbar ist, wobei der Biegestab (20) elastisch verformbar ist.

2. Abstreifeinrichtung (10) gemäß Anspruch 1, wobei das Abstreifelement (17) eine Öffnung (18) für das Überdrücken des Zuschnittes auf die Pineinheit (30) aufweist.

3. Abstreifeinrichtung (10) gemäß einem der vorangegangenen Ansprüche, umfassend einen Zustellzylinder (13), wobei ein im Zustellzylinder (13) aufgenommener Zylinder einen Zylinderflansch (14) umfasst oder an diesem befestigt ist.

4. Abstreifeinrichtung (10) gemäß Anspruch 3, wobei ferner ein Anschlagelement (15) vorgesehen ist, um eine Öffnungsbewegung der Abstreifeinrichtung (10) zu begrenzen.

5. Abstreifeinrichtung (10) gemäß einem der vorangegangenen Ansprüche, wobei sich der Biegestab (20) in einer Bewegungsrichtung des Abstreifelements (17) erstreckt.

6. Abstreifeinrichtung (10) gemäß einem der vorangegangenen Ansprüche, umfassend ein Klemmstück (11), welches Klemmstück (11) eine Öffnung aufweist, in der eine Welle (16) aufgenommen ist, an der deren Ende das Abstreifelement (17) vorgesehen ist.

7. Greifeinrichtung (100), umfassend eine oder mehrere Abstreifeinrichtung (10), wobei die Abstreifeinrichtung (10) ein bewegbares Abstreifelement (17), und einen durch eine Öffnung eines Dekorelements (W) und in eine Zentrieröffnung (31) einer Pineinheit (30) einführbaren Biegestab (20) umfasst, wobei der Biegestab (20) elastisch verformbar ist.

8. Greifeinrichtung (100) gemäß Anspruch 7, umfassend eine Saugeinrichtung zum Halten des Dekorelements (W) an der Greifeinrichtung (10), und/oder
die Greifeinrichtung einen Roboter, insbesondere einen Mehrachs-Roboter umfasst.

9. System, umfassend eine Greifeinrichtung (100) gemäß einem der Ansprüche 1-8 sowie die Pinheit (30) zur Aufnahme des Dekorzuschnitts beim Abstreifen von der Greifeinrichtung (100) .

10. System gemäß Anspruch 9, wobei die Zentrieröffnung (31) zumindest abschnittsweise kegelförmig ausgebildet ist.

11. Verfahren zum Einbringen eines Dekorelements (W) in ein Kaschierwerkzeug, umfassend die Schritte:
Bereitstellen einer Abstreifeinrichtung (10), umfassend einen Biegestab (20), der durch eine Öffnung (W-2) eines Dekorelements (W) führbar ist,
Einfädeln des Biegestabs (20) in die Öffnung (W-2) des Dekorelements (W) und Positionieren des Dekorelements (W) an einer Greifeinrichtung (100),
Bewegen des Dekorelements (W) entlang des Biegestabs (20) zum Abstreifen des Dekorelements (W) von der Greifeinrichtung (100).

12. Verfahren gemäß Anspruch 11, wobei beim Abstreifen ein im Dekorelement (W) vorgesehenes Pinloch (W-1) auf einen Pin des Kaschierwerkzeug gedrückt wird.

13. Verfahren gemäß Anspruch 11 oder 12, wobei das Dekorelement (W) zeitweise mittels Unterdruck an der Greifeinrichtung (100) gehalten wird.

14. Verfahren gemäß einem der Ansprüche 11-13, umfassend den Schritt: Einbringen und Platzieren des Dekorelements (W) in einem Kaschierwerkzeug.

15. Verfahren gemäß einem der Ansprüche 11-14, wobei das Dekorelement (W) ein Echtleder, ein Kunstleder, ein Textilelement oder eine Folie ist.
